## Europäisches Patentamt
## European Patent Office
## Office européen des brevets

(19)

(11) Numéro de publication: **0 056 913**
**B1**

(12) # FASCICULE DE BREVET EUROPEEN

(45) Date de publication du fascicule du brevet:
**14.08.85**

(51) Int. Cl.⁴: **G 01 L 19/06**

(21) Numéro de dépôt: **81401621.8**

(22) Date de dépôt: **15.10.81**

(54) **Appareil de protection pour capteurs de pressions différentielles contre le dépassement d'une pression différentielle maximale donnée.**

(30) Priorité: **27.01.81 FR 8101436**

(43) Date de publication de la demande:
**04.08.82 Bulletin 82/31**

(45) Mention de la délivrance du brevet:
**14.08.85 Bulletin 85/33**

(84) Etats contractants désignés:
**AT BE CH DE GB IT LI LU NL SE**

(56) Documents cités:
**FR - A - 1 042 197**
**FR - A - 2 422 153**
**FR - A - 2 445 521**
**GB - A - 1 566 703**
**US - A - 2 558 534**
**US - A - 2 981 110**

(73) Titulaire: **Appareillages et Matériels de Servitudes (A M S) Société anonyme, 12, Rue de Chevilly La Cerisaie 108, F-94262 Fresnes Cedex (FR)**

(72) Inventeur: **Hellouin de Menibus, Olivier, Clos Bellevue, F-91150 Etampes (FR)**

(74) Mandataire: **Chambon, Georges et al, Cabinet Chambon 6 et 8 avenue Salvador Allende, F-93804 Epinay S/Seine Cédex (FR)**

ACTORUM AG

## Description

Il existe dans le commerce, de nombreux types d'appareils destinés à protéger des capteurs de pressions ou manomètres qui mesurent des pressions relatives ou absolues.

Un système connu comporte par exemple un clapet, maintenu ouvert par une contre-pression déterminée de telle sorte que ledit clapet puisse fermer le circuit amont lorsque la pression dans ce circuit devient supérieure à ladite contre-pression, assurant ainsi une protection du capteur placé en aval.

Les capteurs ou manomètres différentiels sont destinés à mesurer une différence de pression entre deux fluides et, s'il est possible de protéger par exemple, le circuit haute-pression contre les surpressions, par un système du type susmentionné, il est par contre impossible, avec un tel système, de protéger dans tous les cas le capteur, contre une pession différentielle trop grande qui risquerait de le détériorer.

Les capteurs différentiels étant des matériels généralement très coûteux, il est important de les protéger, ce qui est particulièrement délicat puisqu'il faut alors tenir compte, non pas d'une pression mais de l'écart entre deux pressions.

Le brevet US-A 2 558 534 décrit un dispositif destiné à protéger des capteurs de pressions différentielles.

Ce dispositif assez complexe comporte deux séries de chambres respectivement basse et haute pression, chaque série étant reliée d'une part, au circuit à mesurer et d'autre part, au capteur.

Les séries de chambres sont séparées entre elles par un moyen sensible aux pressions sollicité vers les chambres haute-pression par un moyen de contre-pression réglé en fonction de la pression différentielle maximale admise par le capteur.

Dans ce dispositif, des gicleurs et des pistons sont prévus de manière à fermer (en cas de pression différentielle trop grande) les arrivées de fluide du circuit dans lesdites chambres et mettre en communication les conduits de branchement desdites chambres au capteur, de manière à équilibrer les chambres haute et basse-pression du capteur lui-même.

L'invention propose un appareil plus simple pour protéger ce type de capteur, contre le dépassement d'une pression différentielle maximale donnée entre une ligne basse pression et une ligne haute-pression.

L'appareil selon l'invention comporte un corps qui forme une chambre basse-pression munie d'une entrée reliée à la ligne basse-pression et une chambre haute-pression munie d'un orifice d'entrée relié à la ligne haute-pression et d'une sortie reliée au capteur, les deux chambres étant séparées l'une de l'autre par un moyen sensible aux pressions qui est sollicité vers la chambre haute-pression par un moyen de contre-pression réglé en fonction de la pression différentielle maximale admise par le capteur. Cet appareil est caractérisé en ce que l'orifice d'entrée de la chambre haute-pression est obturable par un premier clapet qui est sollicité à l'ouverture par le moyen de contre-pression et que les deux chambres peuvent communiquer entre elles par une soupape qui est sollicitée à la fermeture par ledit moyen de contre-pression et qui est aménagée pour ne pouvoir s'ouvrir qu'après l'obturation de l'orifice d'entrée de la chambre haute-pression.

De préférence, le moyen de contre-pression est un ressort dont la compression est règlable et qui s'appuie sur le moyen sensible aux pressions.

Selon des modes de réalisation différents, le moyen sensible aux pressions, qui sépare les deux chambres, est formé par une membrane fixée à sa périphérie dans le corps ou entre deux parties de ce dernier ou bien par un piston monté coulissant dans le corps entre l'entrée de la chambre basse-pression et la sortie de la chambre haute-pression ou encore par un soufflet métallique ou tout autre moyen.

L'obturation de l'orifice d'entrée de la chambre haute-pression, de même que la communication entre les chambres, peuvent être obtenues par divers moyens combinés ou non.

C'est ainsi, par exemple, qu'un mode de réalisation selon l'invention est remarquable en ce que le moyen sensible aux pressions présente un orifice sensiblement en son centre et qu'un poussoir tubulaire est fixé par une extrêmité audit moyen, coaxialement audit orifice et en faisant saillie dans la chambre haute-pression, tandis que le moyen de contre-pression qui agit sur le moyen sensible aux pressions, sollicite l'extrêmité libre dudit poussoir à venir en contact et pousser le premier clapet qui est lui-même sollicité par un moyen élastique à venir obturer de manière étanche l'orifice d'entrée de la chambre haute-pression, de telle sorte qu'une pression différentielle, pratiquement égale à la sollicitation du moyen de contre-pression, entraîne la fermeture du premier clapet d'obturation de l'orifice d'entrée de la chambre haute-pression et qu'après cette fermeture, une diminution de la basse-pression provoque une séparation dudit premier clapet et du poussoir, tendant à équilibrer ainsi les pressions dans les deux chambres, ce qui ramène ledit premier clapet en contact avec le poussoir tandis qu'une augmentation de la basse-pression ou une diminution de la haute-pression entraîne une nouvelle ouverture de l'orifice d'entrée de la chambre haute-pression.

Un autre mode de réalisation est remarquable en ce que le moyen sensible aux pression présente un orifice sensiblement en son centre et qu'un second clapet est prévu dans la chambre haute-pression pour obturer ledit orifice tandis que ledit second clapet est muni d'un prolongement qui s'étend dans la chambre haute-pression et qui est solidaire à son autre extrêmité dudit premier clapet qui est sollicité par un moyen élastique à venir obturer de manière étanche l'orifice d'entrée de la chambre haute-pression, de telle sorte que le moyen de contre-pression agissant sur le moyen sensible aux pressions, tend à la fermeture de l'orifice central de ce dernier et à l'ouverture de l'orifice d'entrée de la chambre haute-pression jusqu'à ce que la pression différentielle soit pratiquement égale à là sollicitation du moyen de contre-pression et entraîne la fermeture du premier clapet d'obturation de l'orifice d'entrée de la chambre haute-pression et qu'après cette fermeture, une diminution de la basse-pression provoque l'ouverture du second clapet entre les chambres tendant à équilibrer ainsi les pressions dans ces dernières, ce qui referme ledit second clapet tandis qu'une augmentation de la basse-pression ou une diminution de la haute-pression entraîne une nouvelle ouverture de l'orifice d'entrée de la chambre haute-pression.

Avantageusement, dans ce dernier cas, le prolongement qui solidarise lesdits premier et second clapets coulisse dans un guide fixé dans le corps.

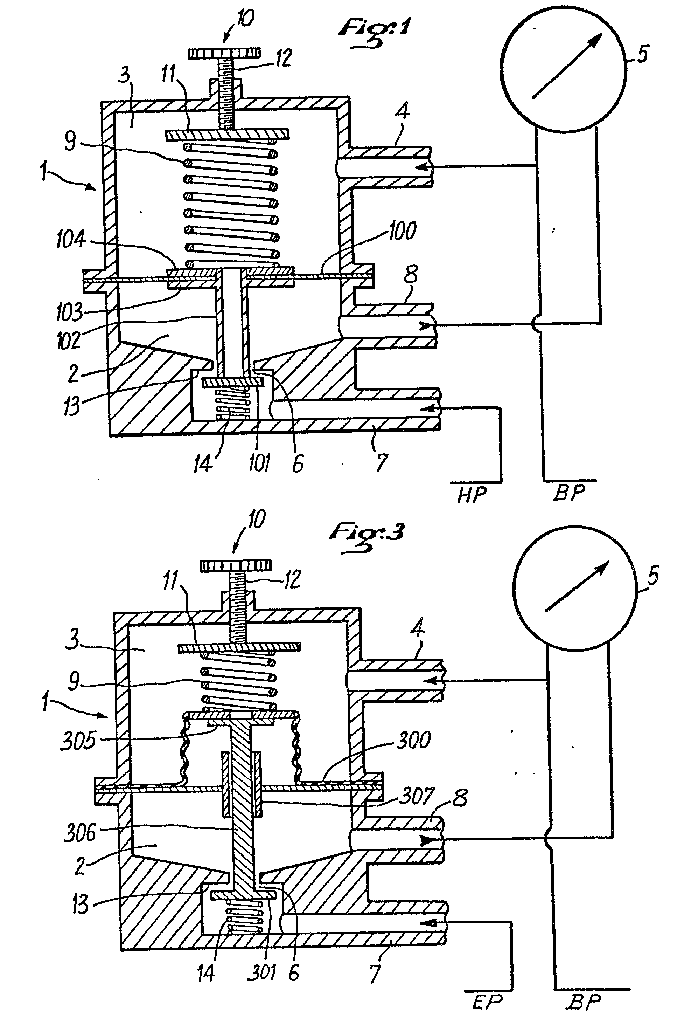

L'invention sera mieux comprise à la lecture de la description qui va suivre et qui se réfère au dessin annexé dans lequel les figures 1 à 3 montrent trois modes de réalisation munis respectivement d'une membrane, d'un piston et d'un soufflet métallique.

Pour faciliter la lecture de ce qui suit, les références à un ou deux chiffres sont réservés aux moyens identiques dans les trois figures, tandis que les moyens différents, mais de fonctions comparables d'une figure à l'autre, portent des références à trois chiffres dont les deux derniers sont identiques alors que le chiffre des centaines correspond au numéro de la figure. En outre, dans ce qui suit «haute-pression» et «basse-pression» seront de manière classique figurées respectivement par HP et BP.

Les figures 1 à 3 montrent un appareil formé par un corps 1 dont l'intérieur est séparé par un moyen sensible aux pressions 100, 200, 300 de manière à former une chambre HP 2 et une chambre BP 3.

La chambre BP 3 est munie d'une entrée 4 reliée en dérivation à la ligne BP du circuit qui arrive au capteur 5 à protéger.

La chambre HP 2 présente un orifice 6 d'entrée relié par une conduite 7 à la ligne HP. Cette chambre HP est également munie d'une sortie 8 raccordée au capteur 5.

Dans la chambre BP 3 est monté un ressort 9 qui est calé entre le moyen sensible aux pression 100, 200, 300 et un dispositif de réglage 10 de la compression dudit ressort.

Le dispositif de réglage est formé par une plaque 11 solidaire d'une vis 12 qui traverse un filetage conjugué de la partie supérieure du corps 1.

Au niveau de l'orifice d'entrée 6, le corps 1 forme un épaulement 13 qui constitue un siège pour un premier clapet 101, 201, 301 disposé en amont dudit orifice et sollicité par un ressort 14 calé dans la conduite 7.

Dans la figure 1 le moyen sensible aux pressions est une membrane 100 dont la périphérie est serrée entre deux parties constitutives du corps 1.

Le centre de la membrane 100 est muni d'un orifice tandis qu'un poussoir tubulaire 102 est fixé à ladite membrane coaxialement à son orifice central et s'étend dans la chambre HP 2.

Le poussoir 102 est par exemple formé par un tube muni d'un collet 103 sur lequel repose la membrane tandis qu'une rondelle 104, par exemple vissée à l'extrémité du poussoir, fixe l'ensemble.

Le ressort 9 s'applique sur la rondelle 104 et exerce donc son effet sur la membrane 100.

L'extrêmité du poussoir tubulaire 102 s'appuie, dans la position représentée, sur le premier clapet 101.

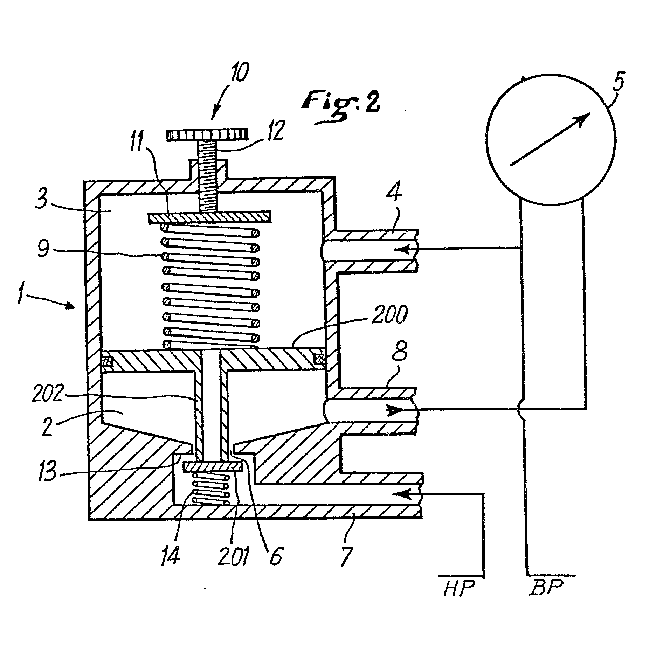

Le mode de réalisation de la figure 2 présente un dispositif très voisin de celui de la figure 1 à l'exception du moyen sensible aux pressions qui est constitué ici par un piston 200. Le piston 200 est percé en son centre comme la membrane 100, tandis que cet orifice central se prolonge par un poussoir tubulaire 202. Le piston 200 est sollicité par le ressort 9 et peut coulisser de manière étanche dans le corps 1 entre l'entrée 4 de la chambre BP et la sortie 8 de la chambre HP.

Le mode de réalisation de la figure 3 présente une structure légèrement différente au niveau du moyen sensible aux pressions et des clapets d'obturation.

Le dispositif de la figure 3 est pourvu d'un soufflet métallique 300 fixé à sa périphérie, comme la membrane 100, dans le corps 1. Ce soufflet s'étend dans la chambre BP et présente un orifice central ménagé à son sommet qui, comme le montre la figure, est renforcé.

L'orifice central du soufflet 300 est obturable par un second clapet 305. Le second clapet 305 est muni d'un prolongement 306 solidaire à son autre extrêmité du clapet 301.

En outre, ce dispositif est muni d'un guide 307 fixé au corps 1 pour guider le prolongement 306.

Si les trois modes de réalisation montrés présentent des petites particularités entre eux, il est clair que leur fonctionnement est semblable, comme on le verra ci-après. En outre, il est important de noter que les appareils montrés aux figures 1 et 2 peuvent parfaitement être équipés des moyens 301, 305, 306 et 307 de la figure 3 à la place des moyens respectivement 101, 102, 103 et 104 ou 201 et 202.

De même, l'appareil de la figure 3 peut être équipé des moyens 101 à 104 à la place des moyens 301, 305, 306 et 307.

Autrement dit, le moyen sensible aux pressions peut être indifféremment une membrane 100, un piston 200 ou un soufflet 300 et les moyens d'obturation peuvent être indifféremment constitués par un poussoir tubulaire 102, 202, combiné avec un premier clapet 101, 201 ou par les deux premier et second clapet 301 et 305 relié par un prolongement 306.

Les trois figures constituent en fait six modes de réalisation et il est parfaitement possible d'imaginer encore des variantes.

Le fonctionnement de l'appareil est clair.

Le ressort 9 est taré par le moyen de règlage 10

pour exercer une contre-pression sensiblement égale à l'écart maximal entre la HP et la BP admissible par le capteur 5, le ressort 14 étant ici négligeable.

Lorsque l'écart de pression reste inférieur à la valeur maximale admissible, le premier clapet 101, 201, 301 sollicité indirectement par le ressort 9, reste ouvert et le capteur 5 reçoit normalement les pressions qui règnent dans les lignes HP et BP.

Maintenant, si la HP monte ou si la BP diminue de manière telle que l'écart de ces deux pressions devient supérieur à l'écart maximal admissible, le moyen sensible aux pressions se déforme (membrane 100, soufflet 300) ou se déplace (piston 200) vers la chambre BP 3, de telle sorte que le premier clapet 101, 201, 301 sollicité par le ressort 14 vient obturer l'orifice d'entrée 6 de la chambre HP 2. La fermeture du premier clapet 101, 201, 301 est donc obtenue par la pression qui s'exerce sur le moyen sensible aux pressions et qui entraîne le soulèvement du poussoir 102, 202 ou du prolongement 306 et donc celui du premier clapet.

Il faut noter aussi que le premier clapet 101, 201, 301 présente une petite surface sur laquelle s'exerce une pression qui tend à sa fermeture et dont il sera question plus loin.

Pendant la fermeture du premier clapet 101, 201, 301, le poussoir 102, 202 (figure 1 et 2) ou le second clapet 305 (figure 3) obture l'orifice du moyen sensible aux pressions grâce à la sollicitation du ressort 14.

Dans cette position (premier clapet 101, 201, 301 fermé), il est clair que la HP arrivant au capteur 5, est limitée et reste à une valeur déterminée, même si la HP de la ligne continue d'augmenter.

Toujours dans cette position, si la BP vient ou continue à baisser, le moyen sensible aux pressions continue à se déformer (100, 300) ou à se déplacer (200), ce qui entraîne la séparation du poussoir tubulaire 102, 202 et du premier clapet 101, 201 ou respectivement l'ouverture du second clapet 305, de telle sorte que les chambres HP et BP communiquent, ce qui tend à équilibrer les pressions, protégeant ainsi le capteur 5.

Le passage du fluide de la chambre HP dans la chambre BP entraîne une diminution de l'écart des pressions et provoque un mouvement inverse de celui déjà décrit, du moyen sensible aux pressions. Ce mouvement entraîne la fermeture de la communication entre les chambres par l'application du poussoir 102, 202 sur le premier clapet 101, 201 ou respectivement la fermeture du second clapet 305.

Au contraire, et toujours à partir de la position où le premier clapet 101, 201, 301 est fermé, une augmentation de la BP ou une diminution de HP cause de nouveau l'ouverture de l'orifice d'entrée de la chambre HP.

En effet, une augmentation de la BP entraîne une déformation ou un déplacement du moyen sensible aux pressions vers la chambre HP et donc une ouverture du premier clapet 101, 201, 301, tandis qu'une diminution de la HP entraîne une sollicitation par pression plus faible sur ledit premier clapet et donc une ouverture de ce dernier.

Dans ce cas, le capteur 5 est de nouveau en communication directe avec les lignes HP et BP jusqu'à ce qu'un nouvel écart de pressions trop important vienne de nouveau provoquer les opérations sus-mentionnées.

En outre, la structure des appareils représentés crée une petite hystérésis entre la fermeture du premier clapet 101, 201, 301 et la mise en communication des chambres HP et BP. En effet, ledit premier clapet se ferme par les forces exercées par les fluides sur le moyen sensible aux pressions et sur le premier clapet lui-même, c'est-à-dire pour un écart de pressions légèrement inférieur à la contre-pression exercée par le ressort 9 tandis que la communication des chambres survient pour un écart de pression égal à ladite contre-pression.

De nombreuses modifications peuvent évidemment être apportées aux modes de réalisation décrits. Ces modifications ou variantes peuvent notamment concerner le moyen sensible aux pressions et les moyens d'obturation, ces derniers pouvant être formés par deux clapets (figure 3) ou un clapet double (figures 1 et 2) ou autrement. De même, la réalisation et la forme du corps peuvent subir des modifications et le moyen de contre-pression sous forme de ressort peut être remplacé par une petite chambre étanche gonflée, à l'azote par exemple.

Il est possible aussi de prévoir d'autres éléments tel qu'un indicateur de fonctionnement de l'appareil de protection, au moyen, par exemple, d'un indicateur de fermeture du premier clapet 101, 201, 301.

Le mode de réalisation sera généralement choisi en fonction des pressions et des fluides rencontrés, les modes de réalisation des figures 2 et 3 étant plus particulièrement destinés aux pressions élevées et aux fluides agressifs.

Enfin, il est évidemment possible d'équiper un circuit avec plusieurs capteurs et plusieurs appareils de protection dont les sensibilités diffèrent.

**Revendications**

1. Appareil de protection d'un capteur (5) de pressions différentielles contre le dépassement d'une pression différentielle maximale donnée entre une ligne basse-pression et une ligne haute-pression comportant un corps (1) qui forme une chambre basse-pression (3) muni d'une entrée (4) reliée à la ligne basse-pression et une chambre haute-pression (2) muni d'un orifice d'entrée (6) relié à la ligne haute-pression et d'une sortie (8) reliée au capteur (5), les deux chambres (2, 3) étant séparées l'une de l'autre par un moyen sensible aux pressions (100, 200, 300) qui est sollicité vers la chambre haute-pression (2) par un moyen de contre-pression (9, 10) réglé en fonction de la pression différentielle maximale admise par le capteur, caractérisé en ce que l'orifice d'entrée (6) de la chambre haute-pression (2) est obturable par un premier clapet (101, 201, 301) qui est sollicité à l'ouverture par le moyen de contre-pression (9, 10) et que les deux chambres (2, 3) peuvent communiquer entre elles par une soupape qui est sollicitée à la fermeture par ledit moyen de contre-pression (9, 10) et qui est aménagée pour ne pouvoir s'ouvrir qu'après l'obturation de l'orifice d'entrée (6) de la chambre haute-pression (2).

2. Appareil selon la revendication 1, caractérisé en ce que la ligne basse-pression est reliée directement et en permanence d'une part, audit capteur (5), et d'autre partir, à la chambre basse-pression (3) par l'entrée (4) de ladite chambre et en ce que la sortie (8) de la chambre haute-pression (2) est reliée directement et en permanence audit capteur (5).

3. Appareil selon l'une des revendications 1 et 2 caractérisé en ce que le moyen de contre-pression est un ressort (9) dont la compression est réglable (10) et qui s'appuie sur le moyen sensible aux pressions (100, 200, 300).

4. Appareil selon l'une des revendications 1 à 3, caractérisé en ce que le moyen sensible aux pressions qui sépare les deux chambres (2 et 3) est formé par une membrane (100) fixée à sa périphérie dans le corps (1) de l'appareil ou entre deux parties dudit corps (1).

5. Appareil selon l'une des revendications 1 à 3, caractérisé en ce que le moyen sensible aux pressions qui sépare les deux chambres (2, 3), est formé par un piston (200) monté coulissant de manière étanche dans le corps entre l'entrée (4) de la chambre basse-pression (3) et la sortie (8) de la chambre haute-pression (2).

6. Appareil selon l'une des revendications 1 à 3, caractérisé en ce que le moyen sensible aux pressions qui sépare les deux chambres (2, 3) est formé par un soufflet métallique (300).

7. Appareil selon l'une des revendications 1 à 6, caractérisé en ce que le moyen sensible aux pressions (100, 200, 300) présente un orifice situé sensiblement en son centre et qu'un poussoir tubulaire (102, 202) est fixé par une extrêmité audit moyen (100, 200, 300), coaxialement audit orifice et en faisant saillie dans la chambre haute-pression (2) tandis que le moyen de contre-pression (9, 10) qui agit sur le moyen sensible aux pressions (100, 200, 300), sollicite l'extrêmité libre dudit poussoir tubulaire (102, 202) à venir en contact et pousser ledit premier clapet (101, 201) qui est lui-même sollicité par un moyen élastique (14) à venir obturer de manière étanche l'orifice d'entrée (6) de la chambre haute-pression (2) de telle sorte qu'une pression différentielle, pratiquement égale à la sollicitation du moyen de contre-pression (9, 10) entraîne la fermeture dudit premier clapet (101, 201) d'obturation de l'orifice d'entrée (6) de la chambre haute-pression (2) et, qu'après cette fermeture, une diminution de la basse-pression provoque une séparation dudit premier clapet (101, 201) et du poussoir tendant à équilibrer ainsi les pressions dans les deux chambres (2, 3) ce qui ramène ledit premier clapet (101, 201) en contact avec le poussoir tubulaire (102, 202) tandis qu'une augmentation de la basse-pression ou une diminution de la haute-pression entraîne une nouvelle ouverture de l'orifice d'entrée (6) de la chambre haute-pression (2).

8. Appareil selon l'une des revendications 1 à 6, caractérisé en ce que le moyen sensible aux pressions (100, 200, 300) présente un orifice sensiblement en son centre et qu'un second clapet (305) est prévu dans la chambre haute-pression (2) pour obturer ledit orifice, tandis que ledit second clapet (305) est muni d'un prolongement (306) qui s'étend dans la chambre haute-pression (2) et qui est solidaire à son autre extrêmité dudit premier clapet (301) qui est sollicité par un moyen élastique (14) à venir obturer de manière étanche l'orifice d'entrée (6) de la chambre haute-pression (2) de telle sorte que le moyen de contre-pression (9, 10), agissant sur le moyen sensible aux pressions (100, 200, 300), tend à la fermeture de l'orifice central de ce dernier et à l'ouverture de l'orifice d'entrée (6) de la chambre haute-pression (2) jusqu'à ce que la pression différentielle soit pratiquement égale à la sollicitation du moyen de contre-pression (9, 10) et entraîne la fermeture du premier clapet (301) d'obturation de l'orifice d'entrée (6) de la chambre haute-pression (2) et qu'après cette fermeture, une diminution de la basse-pression provoque l'ouverture du second clapet (305) entre les chambres (2, 3) tendant à équilibrer ainsi les pressions dans ces dernières (2, 3), ce qui referme ledit second clapet (305) tandis qu'une augmentation de la basse-pression ou une diminution de la haute-pression entraîne une nouvelle ouverture de l'orifice d'entrée (6) de la chambre haute-pression (2).

9. Appareil selon la revendication 8, caractérisé en ce que le prolongement (306) qui solidarise les premier et second clapets (301, 305) coulisse dans un guide (307) fixé dans le corps (1) de l'appareil.

---

**Patentansprüche**

1. Schutzvorrichtung für Differenzdruckaufnehmer (5) gegen das Überschreiten eines gegebenen maximalen differentialen Druckes zwischen einer Niederdruckleitung und einer Hochdruckleitung, bestehend aus einem Körper (1) als Niederdruckkammer (3) mit einem Eingang (4), der mit der Niederdruckleitung verbunden ist und als Hochdruckkammer (2) mit einer Eingangsöffnung (6), die mit der Hochdruckleitung sowie mit einem mit dem Aufnehmer (5) verbundenen Ausgang (8) verbunden ist, wobei beide Kammern (2, 3) voneinander durch ein druckempfindliches Mittel (100, 200, 300) getrennt sind, das in Richtung Hochdruckkammer (2) beansprucht ist, und zwar durch ein Gegendruckmittel (9, 10), das in Abhängigkeit von dem zulässigen maximalen differentialen Druck durch den Aufnehmer einreguliert ist, dadurch gekennzeichnet, dass die Eingangsöffnung (6) der Hochdruckkammer (2) durch eine erste Klappe (101, 201, 301), die beim Öffnungsvorgang durch das Gegendruckmittel

9        0 056 913        10

(9, 10) beansprucht wird, absperrbar ist, und dadurch, dass beide Kammern (2, 3) miteinander verbunden werden können durch ein Ventil, das beim Schliessvorgang durch das genannte Gegendruckmittel (9, 10) beansprucht wird und das so eingerichtet ist, dass es sich erst nach Schliessung der Eingangsöffnung (6) der Hochdruckkammer (2) öffnen kann.

2. Vorrichtung gemäss Anspruch 1, dadurch gekennzeichnet, dass die Niederdruckleitung direkt und permanent mit dem genannten Aufnehmer (5) einerseits und mit der Niederdruckkammer (3) andererseits durch den Eingang (4) der genannten Kammer verbunden ist und dadurch, dass der Ausgang (8) der Hochdruckkammer (2) direkt und permanent mit dem genannten Aufnehmer (5) verbunden ist.

3. Vorrichtung gemäss irgendeinem der Ansprüche 1 und 2, dadurch gekennzeichnet, dass das Gegendruckmittel eine Feder (9) mit einstellbarer Druckkraft (10) ist, die sich auf das druckempfindliche Mittel (100, 200, 300) stützt.

4. Vorrichtung gemäss irgendeinem der Ansprüche 1 bis 3, dadurch gekennzeichnet, dass das druckempfindliche Mittel, das beide Kammern (2 und 3) trennt, eine Membrane (100) ist, die entweder an ihrer Peripherie im Körper (1) der Schutzvorrichtung oder zwischen zwei Teilen des genannten Körpers (1) befestigt ist.

5. Vorrichtung gemäss irgendeinem der Ansprüche 1 bis 3, dadurch gekennzeichnet, dass das druckempfindliche Mittel, das beide Kammern (2, 3) trennt, ein Kolben (200) ist, der gleitend, dennoch dicht im Körper zwischen dem Eingang (4) der Niederdruckkammer (3) und dem Ausgang (8) der Hochdruckkammer (2) angebracht ist.

6. Vorrichtung gemäss irgendeinem der Ansprüche 1 bis 3, dadurch gekennzeichnet, dass das druckempfindliche Mittel, das beide Kammern (2, 3) trennt, durch einen metallischen Balgen (300) gebildet ist.

7. Vorrichtung gemäss irgendeinem der Ansprüche 1 bis 6, dadurch gekennzeichnet, dass das druckempfindliche Mittel (100, 200, 300) eine weitgehend in seiner Mitte angebrachte Öffnung aufweist, und dadurch, dass ein Rohrstössel (102, 202), an einem seiner Enden an dem genannten Mittel (100, 200, 300) koaxial zu der genannten Öffnung und in der Hochdruckkammer (2) hervorstehend befestigt ist, während das Gegendruckmittel (9, 10), das auf das druckempfindliche Mittel (100, 200, 300) wirkt, das freie Ende des genannten Rohrstössels (102, 202) beansprucht, und zwar bis zum Anliegen auf der genannten ersten Klappe (101, 201) und Verschieben derselben, die selbst durch ein elastisches Mittel (14) bis zur dichten Schliessung der Eingangsbohrung (6) der Hochdruckkammer (2) belastet wird und zwar so, dass ein differentialer Druck, der praktisch der Belastungskraft des Gegendruckmittels (9, 10) gleicht, die Schliessung der genannten ersten Absperrklappe (101, 201) der Eingangsöffnung (6) der Hochdruckkammer (2) bewirkt und dadurch, dass nach dieser Schliessung eine Minderung des Niederdrucks eine Trennung der genannten ersten Klappe (101, 201) vom Stössel bewirkt, und so ein Gleichgewicht zwischen den Drücken in beiden Kammern (2, 3) herstellt, wodurch die genannte erste Klappe (101, 201) wieder in Berührung mit dem Rohrstössel (102, 202) kommt, während eine Steigerung des Niederdruckes bzw. eine Herabsetzung des Hochdruckes erneut die Öffnung des Eingangs (6) der Hochdruckkammer (2) verursacht.

8. Vorrichtung gemäss irgendeinem der Ansprüche 1 bis 6, dadurch gekennzeichnet, dass das druckempfindliche Mittel (100, 200, 300) eine weitgehend in seiner Mitte angebrachte Öffnung aufweist und dadurch, dass eine zweite Klappe (305) in der Hochdruckkammer (2) zur Absperrung der genannten Öffnung vorgesehen ist, während die genannte zweite Klappe (305) mit einer Verlängerung (306) versehen ist, die bis in die Hochdruckkammer (2) hineinreicht und an dem anderen Ende der genannten ersten Klappe (301) fest verbunden ist, die durch ein elastisches Mittel (14) bis zur dichten Schliessung der Eingangsöffnung (6) der Hochdruckkammer (2) belastet ist, so dass das Gegendruckmittel (9, 10), das auf das druckempfindliche Mittel (100, 200, 300) einwirkt, zur Schliessung der mittleren Öffnung des letztgenannten und zur Öffnung der Eingangsöffnung (6) der Hochdruckkammer (2) neigt, bis der differentiale Druck praktisch der Belastungskraft des Gegendruckmittels (9, 10) gleicht und die Schliessung der ersten Absperrklappe (301) der Eingangsöffnung (6) der Hochdruckklappe (2) bewirkt und dass nach dieser Schliessung eine Minderung des Niederdruckes die Öffnung der zweiten Klappe (305) zwischen den Kammern (2, 3) bewirkt und dadurch zur Herstellung eines Gleichgewichts zwischen dem Druck in den letztgenannten Kammern (2, 3) neigt, wonach sich die genannte zweite Klappe (305) wieder schliesst, während eine Steigerung des Niederdruckes bzw. eine Minderung des Hochdruckes erneut die Öffnung des Eingangs (6) der Hochdruckkammer (2) bewirkt.

9. Vorrichtung gemäss Anspruch 8, dadurch gekennzeichnet, dass die Verlängerung (306), die die ersten und die zweiten Klappen (301, 305) fest verbindet, in eine Führung (307) gleitet, die im Körper (1) der Vorrichtung befestigt ist.

**Claims**

1. An apparatus for protecting a differential-pressure detector (5) against a differential pressure exceeding a given maximum between a low-pressure line and a high-pressure line, comprising a body (1) which forms a low-pressure chamber (3) provided with an inlet (4) connected to the low-pressure line and a high-pressure chamber (2) provided with an inlet orifice (6) connected to the high-pressure line and with an outlet (8) connected to the detector (5), the two chambers (2, 3) being separated one from the other by a pressure-sensitive means (100, 200, 300) which is forced towards the high-pressure chamber (2) by a counter-pressure means (9, 10) set according to the maximum differential pressure accepted by the detector, characterised in that the inlet orifice (6) of the high-pressure chamber (2) can be blocked by a first valve (101, 201, 301) which is forced to open by the counter-pressure means (9, 10) and in that the two chambers (2, 3) may intercommunicate by means of a valve which is forced to close by said counter-pressure means (9, 10) and which is arranged so that it can only open after the inlet orifice (6) of the high-pressure chamber (2) has been blocked.

2. An apparatus as in Claim 1, caracterised in that the low-pressure line is connected directly and permanently, firstly, to said detector (5) and, secondly, to the low-pressure chamber (3) by the inlet (4) of said chamber and in that the outlet (8) of the high-pressure chamber (2) is connected directly and permanently to said detector (5).

3. An apparatus as in one of Claims 1 and 2, characterised in that the counter-pressure means is a spring (9) the compression of which can be adjusted (10) and which bears on the pressure-sensitive means (100, 200, 300).

4. An apparatus as in one of Claims 1 to 3, characterised in that the pressure-sensitive means which separates the two chambers (2 and 3) is formed by a diaphragm (100) fixed at its periphery in the body (1) of the apparatus or between two parts of said body (1).

5. An apparatus as in one of Claims 1 to 3, characterised in that the pressure-sensitive means which separates the two chambers (2, 3) is formed by a piston (200) fitted so as to slide and form a seal in the body between the inlet (4) of the low-pressure chamber (3) and the outlet (8) of the high-pressure chamber (2).

6. An apparatus as in one of Claims 1 to 3, characterised in that the pressure-sensitive means which separates the two chambers (2, 3) is formed by a metal bellows (300).

7. An apparatus as in one of Claims 1 to 6, characterised in that the pressure-sensitive means (100, 200, 300) exhibits an orifice located substantially at its centre and in that a tubular actuating rod (102, 202) is fixed by one end to said means (100, 200, 300) coaxially with said orifice and so that it projects into the high-pressure chamber (2), whereas the counter-pressure means (9, 10) which acts on the pressure-sensitive means (100, 200, 300) forces the free end of said tubular actuating rod (102, 202) to come into contact with and actuate said first valve (101, 201) which is itself forced by an elastic means (14) to block the inlet orifice (6) of the high-pressure chamber (2), forming a seal, such that a differential pressure practically equal to the force applied by the counter-pressure means (9, 10) causes the closure of said first valve (101, 201) blocking the inlet orifice (6) of the high-pressure chamber (2) and, after said closure, a reduction in the low pressure causes said first valve (101, 201) and the actuating rod to separate, thus tending to equalise the pressures in the two chambers (2, 3), which brings said first valve (101, 201) into contact with the tubular actuating rod (102, 202), whereas an increase in the low pressure or a reduction in the high pressure causes renewed opening of the inlet orifice (6) of the high-pressure chamber (2).

8. An apparatus as in one of Claims 1 to 6, characterised in that the pressure-sensitive means (100, 200, 300) exhibits an orifice substantially at its centre and in that a second valve (305) is provided in the high-pressure chamber (2) to block said orifice, whereas the second valve (305) is fitted with an extension (306) which extends into the high-pressure chamber (2) and is rigidly locked at its other end to said first valve (301) which is forced by an elastic means (14) to block the inlet orifice (6) of the high-pressure chamber (2), forming a seal, such that the counter-pressure means (9, 10) acting on the pressure-sensitive means (100, 200, 300) tends to close the central orifice of the latter and open the inlet orifice (6) of the high-pressure chamber (2) until the differential pressure is practically equal to the force applied by the counter-pressure means (9, 10) and causes the closure of the first valve (301) blocking the inlet orifice (6) of the high-pressure chamber (2) and, after said closure, a reduction in the low pressure causes the second valve (305) between the chambers (2, 3) to open, thus tending to equalise the pressures in the latter (2, 3), which closes said second valve (305) again, whereas an increase in the low pressure or a reduction in the high pressure causes the inlet orifice (6) of the high-pressure chamber (2) to open again.

9. An apparatus as in Claim 8, characterised in that the extension (306) which ridigly locks the first and second valves (301, 305) together slides in a guide (307) fixed in the body (1) of the apparatus.

*Fig:1*

*Fig:3*

Fig.2